# EUROPÄISCHE PATENTSCHRIFT

(11) **EP 3 382 116 B1**
(45) Veröffentlichungstag und Bekanntmachung des Hinweises auf die Patenterteilung: **24.02.2021**
(21) Anmeldenummer: 18164805.6
(22) Anmeldetag: 28.03.2018
(51) Int. Cl.: E03F 5/02, B28B 7/36

(54) **SCHACHTBODENAUSKLEIDUNG UND VERFAHREN ZUR AUSKLEIDUNG EINES SCHACHTES**
SHAFT BASE CLADDING AND METHOD FOR CLADDING A SHAFT
REVÊTEMENT DE FOND DE PUITS ET PROCÉDÉ DE REVÊTEMENT DE FOND DE PUITS

(30) Priorität: 31.03.2017 AT 502572017
(43) Veröffentlichungstag der Anmeldung: 03.10.2018
(60) Teilanmeldung: 19170566.4
(73) Patentinhaber: Predl GmbH, 04924 Bönitz (DE)
(72) Erfinder: Predl, Manfred, 04924 Bönitz (DE)
(74) Vertreter: Beer & Partner Patentanwälte KG

(56) Entgegenhaltungen:
- EP-A1- 1 880 829
- WO-A1-2014/167135
- DE-A1- 1 584 657
- DE-A1- 3 726 752
- DE-A1-102013 108 844
- DE-U1- 29 716 969
- US-A1- 2012 009 020

## Beschreibung

Die Erfindung betrifft eine Schachtbodenauskleidung, insbesondere für einen Abwasserkanalschacht, mit einem Grundkörper, der eine Auftrittsfläche und wenigstens eine Rohranschlussöffnung aufweist.

Weiters betrifft die Erfindung ein Verfahren zur Auskleidung eines Schachtes, insbesondere eines Abwasserkanalschachtes.

Begehbare Schächte älterer Bauart, die gemauert, betoniert oder aus Betonformstücken zusammengesetzt sind, weisen nach einer gewissen Zeit aufgrund von Umwelteinflüssen Zeichen von Korrosion bzw. Abnutzung auf. Insbesondere Zugangsschächte für Abwasserkanäle, an deren Böden Gerinne ausgeformt sind, die Verbindungen zwischen in die Schächte mündenden Abwasserrohren bilden, sind zusätzlich durch Abwässer, die aggressive Substanzen enthalten können, starken Belastungen unterworfen.

Durch Korrosion wird die Oberfläche des Materials, aus dem der Schacht gebaut ist, angegriffen. Um derart durch Korrosion beanspruchte Schächte wieder instand zu setzen, kommen unterschiedliche Sanierungsverfahren zum Einsatz. Neben Beschichtungen der vorhandenen Bausubstanz mit unterschiedlichen Materialien gehört die Sanierung durch Einsetzen vorgefertigter Bauteile in Schachtböden und in aufgehende, d.h. Wandbereiche bildende, Schachtbauteile zum Stand der Technik.

Um Sanierungsarbeiten am Schachtboden vor Ort möglichst effektiv ausführen zu können, wird eine vorgefertigte, an den zu sanierenden Schachtboden angepasste, Schachtbodenauskleidung aus Kunststoff in den Schacht eingeführt, am Grunde des Schachtes angeordnet, gegebenenfalls mit in den Schacht mündenden Rohren verbunden und mit Beton hinterfüllt. Bei Bedarf wird die Innenoberfläche der Wand des Schachtes ebenfalls mit einer vorgefertigten Schachtwandauskleidung ausgekleidet, die ggf. auch an der Wand fixiert und beispielsweise mit Beton hinterfüllt wird.

Da der Einstieg zum Schacht bei vielen Abwasserschächten eine deutlich kleinere lichte Weite aufweist als der Boden des Schachtes, auf dem die Schachtbodenauskleidung aus Kunststoff angeordnet wird, muss bei derzeit gängigen Sanierungsverfahren, welche mit vorgefertigten Sanierungsbauteilen arbeiten, entweder zuerst der obere Teil des Schachtes abgetragen oder die Schachtbodenauskleidung aus Kunststoff in Teilstücke zerteilt werden, welche im Schacht wieder miteinander verbunden werden. Da beide Methoden sehr zeit- und arbeitsaufwändig sind, wirkt sich dies auch negativ auf die Kosten und Zeitdauer der Sanierung aus. Darüber hinaus ist das Abtragen der oberen Schachtbauteile (Konus) nicht in jedem Fall möglich.

Aus DE 101 29 860 A1 ist eine Schachtbodenauskleidung bekannt, welche aus mittels Scharnieren miteinander verbundenen, klappbaren Teilen besteht. Diese Scharniere sind aber einerseits schwierig herzustellen und bilden andererseits Schwachstellen, sowohl was die mechanische Festigkeit als auch die Dichtheit der Schachtbodenauskleidung betrifft und erfordern eine Nacharbeit der Nahtstellen.

Weitere Schachtbodenauskleidungen sind aus DE 297 16 969 U1, EP 1 880 829 A1 und WO 2014/167135 A1 bekannt. Eine Auskleidung, mit der lediglich die Seitenwände eines Schachtes ausgekleidet werden, ist aus US 2012/0009020 A1 bekannt.

Bei bekannten Herstellungsverfahren für Schachtbodenauskleidungen aus Kunststoff für Sanierungen wird anhand der Schachtgeometrie des zu sanierenden Schachtes eine Negativform aus Kunststoff angefertigt, an die anschließend das Material, aus dem die Schachtbodenauskleidung hergestellt wird, angeformt wird.

Bei bekannten Verfahren zur Herstellung von Betonschachtunterteilen für den Neubau von Schächten werden entsprechend der benötigten Schachtgeometrie Negativformen aus geschäumtem Kunststoff gefräst oder herausgeschnitten, welche zur Ausformung der Gerinnegeometrie im Betonierprozess verwendet werden. Da die Oberfläche so einer Negativform aus geschäumtem Kunststoff sehr porös und rau ist, muss die Oberfläche vor dem Auftragen des Materials, aus dem die Schachtbodenauskleidung geformt wird, erst versiegelt bzw. beschichtet werden. Damit wird erreicht, dass sich die Negativform zerstörungsfrei aus dem fertigen Schachtunterteil entfernen lässt und dieser eine möglichst glatte Oberfläche aufweist. Nachteilig daran ist, dass das Versiegeln bzw. Beschichten der Negativform einen nicht unerheblichen Zeit- und Kostenaufwand mit sich bringt.

Der Erfindung liegt daher die Aufgabe zu Grunde, eine Schachtbodenauskleidung und ein Verfahren zum Auskleiden eines Schachtes, insbesondere eines Abwasserkanalschachtes, der eingangs genannten Gattung zur Verfügung zu stellen, welche die Nachteile des Standes der Technik nicht aufweisen. Dadurch soll der Arbeitsaufwand bei einer Schachtsanierung verringert werden.

Gelöst wird diese Aufgabe erfindungsgemäß mit einer Schachtbodenauskleidung, welche die Merkmale des Anspruches 1 aufweist.

Weiters wird diese Aufgabe mit einem Verfahren zum Auskleiden eines Schachtes, das die Merkmale von Anspruch 10 aufweist, gelöst.

Bevorzugte und vorteilhafte Ausführungsformen der Erfindung sind Gegenstand der Unteransprüche.

Erfindungsgemäß ist vorgesehen, dass der Grundkörper einstückig aus einem flexiblen und elastisch verformbaren Material mit einer Wandstärke gefertigt ist, womit er wenigstens in Teilbereichen im Wesentlichen beliebig und elastisch zusammen gebogen werden kann.

Beliebig gebogen bedeutet im Rahmen der Erfindung, dass erhebliche Bereiche des Grundkörpers gebogen werden können, dass aber natürlich aufgrund der dreidimensionalen Form des Grundkörpers einige Bereiche leichter gebogen werden können als andere Bereiche. Durch die Wahl der Wandstärke in einzelnen Bereichen kann diese Biegsamkeit bei Bedarf auch noch beeinflusst werden.

"Biegen" bedeutet im Rahmen der Erfindung im Unterschied zu "Knicken" oder "Falten" des Weiteren, dass der Grundkörper in Bereichen in eine gebogene Form gebracht werden kann. Der Grundkörper wird nicht entlang definierter Kanten, Knickbereichen oder Gelenken plastisch verformt, sondern kann entlang nicht exakt definierter Bereiche elastisch gebogen werden.

In einer besonders bevorzugten Ausführungsform ist an die Auftrittsfläche ein davon abgesenktes Gerinne angeordnet. An dieses Gerinne schließt vorzugsweise wenigstens eine Rohranschlussöffnung an. Insbesondere verbindet das Gerinne alle Rohranschlussöffnungen, die der Grundkörper aufweist. Da im Regelfall eine der Rohranschlussöffnungen als Auslass vorgesehen ist, hat das Gerinne vorzugsweise zu dieser Rohranschlussöffnung hin ein Gefälle mit einem Gefällewinkel. Das Gerinne kann mehrere, insbesondere miteinander in Verbindung stehende, Kanäle aufweisen.

Besonders vorteilhaft ist es, wenn der Grundkörper einen Anschlussrand aufweist, der im Wesentlichen lotrecht von der Auftrittsfläche absteht. Der Anschlussrand verläuft vorzugsweise entlang des Außenumfangs der Auftrittsfläche bzw. ist an eine Außenform der Auftrittsfläche angepasst.

Der Anschlussrand ist in einer vorteilhaften Ausführungsform bis zu 15 Zentimeter hoch, kann im Rahmen der Erfindung aber auch höher ausgeführt sein.

In einer bevorzugten Ausführungsform ist entlang einer Randinnenseite des Anschlussrandes ein Übergangsstreifen angeordnet, wobei der Übergangsstreifen vorzugsweise gleich hoch wie der Anschlussrand und mit diesem verbunden ist. Der Übergangsstreifen besteht vorzugsweise aus einem wenigstens einseitig textilbeschichteten, thermoplastischen Material, kann aber auch aus dem gleichen Material wie die Schachtbodenauskleidung bestehen und muss insbesondere in diesem Fall nicht textilbeschichtet sein. Die Textilfasern sind bevorzugt auf einer dem Anschlussrand bzw. der Randinnenseite zugewandten Oberfläche des Übergangsstreifens angeordnet.

In einer weiteren bevorzugten Ausführungsform weist der Anschlussrand keinen Übergangsstreifen, sondern eine abgesetzte Stufe an der Randinnenseite auf, sodass ein Innendurchmesser des Anschlussrandes im Bereich der Auftrittsfläche kleiner ist als ein Innendurchmesser eines davon nach oben beabstandeten Bereiches des Anschlussrandes.

Im Rahmen der Erfindung kann vorgesehen sein, dass an wenigstens einer Rohranschlussöffnung, gegebenenfalls an bzw. in einem am Grundkörper ausgeformten, rohrförmigen Anschlussstück, ein Rohrstutzen angeordnet ist. Der Rohrstutzen ist vorzugsweise mit einem textilbeschichteten, thermoplastischen Übergangsstreifen verbunden, vorzugsweise verschweißt, welcher am Grundkörper bzw. im Anschlussstück angeordnet und damit verbunden ist. Der Rohrstutzen kann alternativ oder zusätzlich direkt mit dem Grundkörper bzw. dem Anschlussstück verklebt, darauf laminiert oder auf andere Weise verbunden sein.

Bevorzugt ist eine Ausführungsform, bei der eine oder mehrere Haftbrücke(n) am Grundkörper angeordnet, insbesondere mit dem Grundkörper verbunden, ist/sind. Als Haftbrücken werden im Sinne der Erfindung sowohl geometrisch definierte Elemente, wie beispielsweise Leisten, als auch Elemente mit undefinierter geometrischer Form, wie beispielsweise Granulat, angesehen. Besonders vorteilhaft ist es, wenn auf einer gesamten nach außen gerichteten Oberfläche des Grundkörpers Granulat und zusätzlich an bestimmten Stellen noch geometrisch definierte Haftbrücken angeordnet sind. Die Haftbrücken dienen der Verankerung der Schachtbodenauskleidung in dem dahinter eingebrachten bzw. angeformten Material und verhindern, dass sich die Schachtbodenauskleidung, beispielsweise durch den Grundwasserdruck, vom darunterliegenden Material abhebt.

Die Haftbrücken werden während und/oder nach der Herstellung der Schachtbodenauskleidung am Grundkörper angeordnet und bestehen vorzugsweise aus einem starren bzw. steifen Material. Sie werden insbesondere in das flüssige oder pastöse Material des Grundkörpers eingebettet bzw. damit überzogen, sodass sie mit dem wenigstens teilweise verfestigten Material des Grundkörpers verbunden sind. Ebenso denkbar ist es, einzelne oder mehrere bzw. unterschiedlich geformte Haftbrücken am Grundkörper anzukleben, anzulaminieren oder auf andere Art damit zu verbinden.

Bevorzugt ist es, wenn der Grundkörper aus einem elastisch, insbesondere hochelastisch, bzw. flexibel verformbaren Polymer gefertigt ist, wobei auch andere elastisch verformbare bzw. flexible Werkstoffe denkbar sind. Besonders bevorzugt wird als Polymer Polyharnstoffe verwendet.

Um die im Rahmen der Erfindung notwendige Elastizität und Flexibilität aufzuweisen, hat das Material des Grundkörpers vorzugsweise eine Shore-Härte A zwischen 60 und 80, insbesondere zwischen 65 und 75, besonders bevorzugt zwischen 68 und 72. Im Rahmen der Erfindung ist es denkbar, dass das Material eine Shore-Härte A aufweist, die außerhalb der angegebenen Bereiche liegt, wobei wichtig ist, dass sich das Material bei der Wandstärke, mit der es gefertigt ist, ausreichend stark verbiegen lässt, ohne dabei plastisch verformt zu werden.

Im Rahmen der Erfindung ist es besonders vorteilhaft, wenn bei der erfindungsgemäßen Schachtauskleidung nur gegebenenfalls vorhandene Rohrstutzen und/oder Haftbrücken mit geometrisch definierter Form und/oder granulatförmige Haftbrücken starr bzw. biegesteif ausgeführt sind, und der Rest der Schachtbodenauskleidung flexibel und biegbar ausgeführt ist.

Ein Verfahren zur Herstellung eines Formteiles, insbesondere einer Schachtbodenauskleidung für einen Abwasserkanalschacht, kann auf beispielhafte Art und Weise wie folgt beschrieben werden:
In einem ersten Verfahrensschritt wird eine Negativform des herzustellenden Formteiles, insbesondere der Schachtbodenauskleidung, erstellt. Besonders bevorzugt ist es, wenn die Negativform wenigstens teilweise aus einem Kunststoff, insbesondere geschäumtem Kunststoff wie expandiertem Polystyrol, gefertigt, insbesondere aus einem Block eines solchen Materials herausgefräst oder geschnitten wird. Denkbar ist auch, dass wenigstens ein Teil der Negativform, der für mehrere verschiedene Ausführungsformen von Formteilen verwendet werden kann, aus anderen Materialien, wie beispielsweise Metall, insbesondere Aluminium, hergestellt wird.

Die Abmessungen der Negativform für eine Schachtbodenauskleidung richten sich nach dem Schacht, in dem die Schachtbodenauskleidung zum Einsatz kommt und können nach bekannten Maßen oder aufgrund von extra durchgeführten Vermessungen am Schacht ermittelt werden.

In einem folgenden Verfahrensschritt wird die Negativform zumindest bereichsweise mit einer dehnbaren und flexiblen Folie umhüllt. Eine solche Folie besteht vorzugsweise aus einem elastisch, insbesondere hochelastisch, verformbaren Kunststoff, beispielsweise aus Silikon, wobei der Begriff Folie nicht als Einschränkung hinsichtlich der Dicke verstanden werden soll. Die Folie kann, je nach Bedarf oder Material der Folie, unterschiedlich stark, beispielsweise zwischen 0,01 mm bis 5 mm, insbesondere zwischen 0,5 mm und 3 mm, ausgeführt sein. Durch das Umhüllen der Negativform mit der Folie ist die Oberfläche der Negativform geschützt bzw. versiegelt und ausreichend glatt für ein späteres Anformen des Formteiles, insbesondere der Schachtbodenauskleidung.

In einer besonders bevorzugten Durchführungsform des Verfahrensschrittes zum Umhüllen der Negativform wird die fertig erstellte Negativform in einer oben offenen Hüllvorrichtung platziert, die dichtend mit der Folie abgedeckt bzw. verschlossen wird. Anschließend wird die Luft in der Hüllvorrichtung, insbesondere in einem Bereich zwischen der Negativform und der Folie, evakuiert und die Folie durch den Unterdruck an die Negativform gesaugt bzw. durch den Umgebungsdruck an die Negativform angepresst.

In einer bevorzugten Weiterentwicklung dieser bevorzugten Durchführungsform des Verfahrens wird vor dem Erzeugen des Unterdruckes in dem Bereich zwischen der Negativform und der Folie ein Überdruck zwischen Negativform und Folie bzw. in der Hüllvorrichtung erzeugt. Dadurch wird die Folie elastisch verformt und wölbt sich von der Hüllvorrichtung und der darin platzierten Negativform weg. Die Negativform wird gleichzeitig oder anschließend an die gewölbte Folie angenähert und gegebenenfalls mit der Folie in Kontakt gebracht. Dies wird bevorzugt mit einem in der Hüllvorrichtung vorgesehenen Hubmechanismus durchgeführt, der die Negativform in Richtung zur Folie anhebt. Erst danach wird der Unterdruck zwischen der Folie und der Negativform erzeugt. Durch diese Weiterentwicklung lässt sich die Bildung von Falten, die an der Folie beim Umhüllen der Negativform entstehen könnten, weitestgehend verhindern.

Besonders vorteilhaft ist es, wenn im Anschluss an das zumindest bereichsweise Umhüllen der Negativform mit der Folie ein Gurt, ein Ring, eine Spannvorrichtung oder dergleichen umfangseitig um die Negativform, insbesondere um einen von der Folie umhüllten Sockelbereich der Negativform, gespannt wird. Damit wird die Folie so dicht an die Negativform angedrückt bzw. angepresst, dass der Unterdruck zwischen Folie und Negativform von selbst erhalten bleibt und kein Druckausgleich zwischen dem Bereich zwischen Folie und Negativform und der Umgebung stattfinden kann.

In einem weiteren Verfahrensschritt wird der Grundkörper des Formteiles, insbesondere der Schachtbodenauskleidung, erstellt. Dafür wird Material, das sich in einem flüssigen oder pastösen Zustand befindet, an die umhüllte Negativform angeformt, insbesondere aufgesprüht, angegossen, aufgetragen, anlaminiert, gespachtelt oder auf andere Weise aufgebracht. Das Anformen kann manuell und/oder automatisch unter Zuhilfenahme geeigneter Werkzeuge, wie beispielsweise einer Sprühpistole, durchgeführt werden. Das Anformen kann in einem einzigen Schritt oder in mehreren aufeinanderfolgenden Schritten, gegebenenfalls unter Kombination verschiedener, vorstehend erwähnter oder anderer Methoden erfolgen.

Vorzugsweise ist das zum Erstellen des Grundkörpers verwendete Material ein elastisch verformbares Polymer, ein Duroplast oder Elastomer. Besonders bevorzugt ist die Verwendung von Polyharnstoff, wenn der Grundkörper einstückig mit einer Wandstärke gefertigt wird, womit er wenigstens in Teilbereichen im Wesentlichen beliebig zusammen gebogen werden kann. Ebenso denkbar ist es, dass das verwendete Material ein aushärtendes Material, beispielsweise Beton ist, wobei vor dem Auftragen des aushärtenden Materials auch eine dünne Schicht eines Kunststoffes oder eines anderen Materials auf die umhüllte Negativform aufgetragen werden kann.

Bei einer Schachtbodenauskleidung für die Sanierung eines Schachtes ist das Material, aus dem der Grundkörper besteht, in dem Zustand, in dem die Schachtbodenauskleidung in den zu sanierenden Schacht eingebracht wird, flexibel. Es ist auch möglich, dass das Material im Laufe der Zeit nach dem Einbringen in den Schacht noch weiter aushärtet und somit an Flexibilität verliert, was allerdings nicht nachteilig ist. Wesentlich ist, dass das Material zu dem Zeitpunkt, zu dem die Schachtbodenauskleidung in den Schacht eingebracht wird, so flexibel ist, dass der Grundkörper zusammengebogen werden kann, um ihn einfacher durch die Einstiegsöffnung in den Schacht einbringen zu können.

Als flexibel wird verstanden, dass das Material bei einer gleichbleibenden Wandstärke oder bei unterschiedlichen Wandstärken, mit der/denen der Grundkörper gefertigt wird, elastisch verformbar und biegsam ist, insbesondere, dass das Material zerstörungsfrei weitreichend elastisch verformt und um Biegeradien, welche bevorzugt in der Größenordnung von mehr als 1 oder 2 cm, bevorzugt größer als 3 oder 4 cm liegen, elastisch gebogen werden kann.

Vorzugsweise wird während der Herstellung des Grundkörpers durch Anformen an die Negativform wenigstens ein Rohrstutzen und/oder wenigstens ein Übergangsstreifen (z.B. aus faserverstärktem Kunststoff, insbesondere aus glasfaserverstärktem, ungesättigten Polyesterharz, textilkaschiertem Thermoplast oder aus ähnlichen Materialien bzw. Materialkombinationen) an der Negativform angeordnet, insbesondere angelegt, aufgeschoben oder befestigt. Nachdem sich das Material des Grundkörpers zumindest teilweise verfestigt hat, ist der Rohrstutzen mit dem Grundkörper verbunden.

Alternativ können der Grundkörper und wenigstens ein Rohrstutzen auch durchgängig aus ein und demselben flexiblen Material hergestellt werden oder gar kein Rohrstutzen vorgesehen sein. Der/die Rohrstutzen und/oder Übergangsstreifen kann/können auch nach dem Herstellen des Grundkörpers an diesem angeordnet, insbesondere mit diesem verbunden, vorzugsweise verklebt, anlaminiert oder verschweißt, werden.

Weiters ist im Rahmen dieses Verfahrens bevorzugt, dass granulatförmige Haftbrücken und/oder eine oder mehrere Haftbrücken mit geometrisch definierter Form, beispielsweise in Leistenform, bereits bei der Herstellung des Grundkörpers an diesem angeordnet, insbesondere mit dem Grundkörper verbunden werden. Denkbar ist allerdings auch, die Haftbrücke(n) erst nach der Herstellung des Grundkörpers an diesem zu befestigen.

In einem abschließenden Verfahrensschritt wird der Grundkörper von der Negativform entfernt, nachdem sich das Material des Grundkörpers ausreichend verfestigt hat. Ebenso denkbar ist es, dass, nachdem das den Grundkörper bildende Material wenigstens teilweise verfestigt ist, auf diesem Material, insbesondere auf der Seite des Grundkörpers, die von der Negativform abgewandt ist, weiteres aushärtendes Material, insbesondere Beton, aufgebracht wird. Der Grundkörper und das mit dem Grundkörper verbundene weitere Material werden von der Negativform entfernt, nachdem das weitere Material zumindest teilweise verfestigt bzw. ausgehärtet ist.

Das erfindungsgemäße Verfahren zum Auskleiden eines Schachtes, insbesondere zum Sanieren eines Abwasserkanalschachtes, kann auf beispielhafte, den Schutzbereich der Erfindung nicht beschränkende, Art und Weise wie folgt beschrieben werden:
Die Innenfläche des Schachtes, also der Boden, die Wand und die Einstiegsöffnung bzw. das Mannloch, kann vor dem Auskleiden bereichsweise oder großflächig gereinigt und von lockerem Material befreit und gegebenenfalls abgeschliffen oder abgefräst werden. In den Schacht mündende Rohre können bei Bedarf beispielsweise durch Absperrblasen verschlossen bzw. abgedichtet werden. Die Absperrblasen können gleichzeitig zur Fixierung der Rohrstutzen einer in den Schacht eingesetzten Schachtbodenauskleidung dienen.

In einem ersten Verfahrensschritt wird ein Formteil, insbesondere eine Schachtbodenauskleidung hergestellt, die einen Grundkörper aufweist, der flexibel ist und im Wesentlichen beliebig zusammengebogen werden kann.

Die Schachtbodenauskleidung weist wenigstens eine Rohranschlussöffnung und, wenn mehrere Rohranschlussöffnungen vorgesehen sind, vorzugsweise ein zwischen den Rohranschlussöffnungen verlaufendes Gerinne auf.

Die Abmessungen der Schachtbodenauskleidung richten sich nach dem Schacht, in dem die Schachtbodenauskleidung zum Einsatz kommt und können nach bekannten geometrischen Maßen (beispielsweise aus einer vorhandenen Datenbank) oder aufgrund von extra durchgeführten Vermessungen am Schacht ermittelt werden. Das Vermessen kann manuell oder automatisch, beispielsweise mit Hilfe eines 3D-Scanners, durchgeführt werden.

In einem weiteren Verfahrensschritt wird die Schachtbodenauskleidung zusammengebogen und durch die Einstiegsöffnung in den Schacht eingeführt. Im Schacht wird die Schachtbodenauskleidung wieder auseinandergebogen bzw. entfaltet sie sich durch ihre Elastizität weitgehend von alleine in ihre ursprüngliche Form und wird dann am Boden des Schachtes angeordnet.

In einem folgenden Verfahrensschritt wird die Schachtbodenauskleidung am Boden des Schachtes festgelegt bzw. fixiert und in einem weiteren Verfahrensschritt mit aushärtendem Füllmaterial, wie Beton, hinter- bzw. unterfüllt, sodass die Hohlräume zwischen der Schachtbodenauskleidung und dem Boden (und gegebenenfalls eines unteren Randbereiches) des Schachtes ausgefüllt werden.

Das Festlegen bzw. Fixieren der Schachtbodenauskleidung dient im Rahmen der Erfindung dazu, dass die flexible Schachtbodenauskleidung beim Hinterfüllen nicht vom Boden des Schachtes weggedrückt wird bzw. eine unerwünschte Form annimmt.

Besonders bevorzugt ist es im Rahmen der Erfindung, wenn eine Negativform, die zur Herstellung der Schachtbodenauskleidung verwendet oder nach der Herstellung der Schachtbodenauskleidung passend zur Form der Schachtbodenauskleidung hergestellt wurde, falls notwendig zerteilt, in den Schacht eingebracht und passend auf der Schachtbodenauskleidung angeordnet wird. Durch Beschweren dieser (bei Bedarf wieder zusammengesetzten) Negativform wird die Schachtbodenauskleidung beim Hinterfüllen in Position und in Form gehalten und kann weder nach oben gedrückt werden noch eine andere als die gewünschte Form annehmen.

In einer bevorzugten Durchführungsform wird in weiterer Folge eine Schachtwandauskleidung in den Schacht eingebracht. Diese ist vorzugsweise so groß ausgeführt, dass damit die Wand des Schachtes bis zu einer festgelegten Höhe, vorzugsweise über die gesamte Schachthöhe, im Wesentlichen entlang des gesamten Innenumfangs des Schachtes bedeckt werden kann.

Vorteilhaft ist es dabei, wenn die Schachtwandauskleidung mit einem unteren Bereich teilweise in einem lotrecht vom Grundkörper der Schachtbodenauskleidung abstehenden Anschlussrand aufgenommen wird, sodass sich der Anschlussrand und der untere Bereich der Schachtwandauskleidung zumindest abschnittsweise überlappen. Die Schachtbodenauskleidung und die Schachtwandauskleidung werden, insbesondere im Bereich des Anschlussrandes, vorzugsweise dicht miteinander verbunden, beispielsweise verschweißt, verklebt, aneinander laminiert oder durch Einsatz einer Reparaturmanschette miteinander verbunden.

In einer besonders vorteilhaften Durchführungsform wird die Schachtwandauskleidung mit einem Übergangsstreifen aus textilkaschiertem Thermoplast, der an einer Innenseite des Anschlussrandes angeordnet und mit dem Grundkörper verbunden ist, thermisch verbunden, insbesondere verschweißt.

Bevorzugt wird dann auch die Schachtwandauskleidung mit einem Füllmaterial, zum Beispiel Beton, hinterfüllt.

Irgendwann nach der Anordnung der Schachtbodenauskleidung am Boden des Schachtes können die Rohranschlussöffnungen bzw. Rohrstutzen der Schachtbodenauskleidung mit den Rohren, die in den Schacht münden bzw. von diesem weg führen, dicht verbunden, insbesondere verklebt, laminiert oder verschweißt, werden.

Als Füllmaterial zum Hinterfüllen der Schachtbodenauskleidung und/oder der Schachtwandauskleidung wird vorzugsweise ein aushärtendes, mineralisches Material, wie beispielsweise Beton, verwendet. Wenn an der Schachtbodenauskleidung und/oder an der Schachtwandauskleidung Haftbrücken angeordnet sind, werden diese beim Aushärten des Füllmateriales im Füllmaterial verankert.

Weitere Einzelheiten, Merkmale und Vorteile der Erfindung ergeben sich aus der nachstehenden Beschreibung bevorzugter und den Schutzbereich nicht einschränkender Ausführungsformen der Erfindung unter Bezugnahme auf die angeschlossenen Zeichnungen. Es zeigt:
- Fig. 1: eine isometrische Ansicht einer Ausführungsform einer erfindungsgemäßen Schachtbodenauskleidung,
- Fig. 2: eine isometrische Ansicht der zusammengebogenen Schachtbodenauskleidung von Fig. 1,
- Fig. 3: eine isometrische Ansicht einer weiteren Ausführungsform einer mit einer Schachtwandauskleidung verbundenen, erfindungsgemäßen Schachtbodenauskleidung,
- Fig. 4: einen Schnitt entlang der Ebene IV durch die Schachtbodenauskleidung von Fig. 3,
- Fig. 5: eine Detailansicht eines Ausschnittes V aus Fig. 4,
- Fig. 6: eine weitere Detailansicht eines Ausschnittes VI aus Fig. 4,
- Fig. 7: eine weitere Detailansicht eines Ausschnittes VII aus Fig. 4, und
- Fig. 8: einen Schnitt durch eine Hüllvorrichtung, eine Negativform und eine flexible Folie zur Verwendung in einem Verfahren zur Herstellung eines Formteiles, insbesondere einer erfindungsgemäßen Schachtbodenauskleidung.

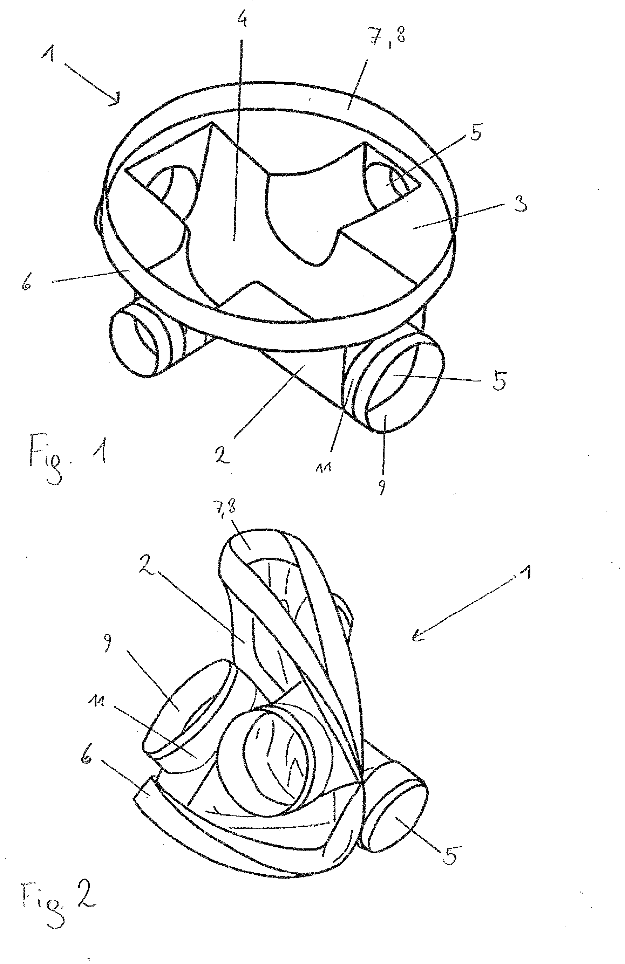

Fig. 1 zeigt eine erfindungsgemäße Schachtbodenauskleidung 1 mit einem Grundkörper 2, die eine Auftrittsfläche 3 mit einem davon abgesenkten Gerinne 4 aufweist, wobei die Auftrittsfläche 3 in der in Fig. 1 dargestellten Ausführungsform im Wesentlichen kreisförmig ist, aber auch andere Formen (z. B. Polygone) im Rahmen der Erfindung denkbar sind. Das Gerinne 4 verbindet Rohranschlussöffnungen 5, die unterhalb der Auftrittsfläche 3 angeordnet sind.

Der Grundkörper 2 besteht aus einem flexiblen Material und ist in einer Wandstärke gefertigt, die es erlaubt, dass er wenigstens in den Bereichen, in welchen er nicht durch seine räumliche Form einen erhöhten Verformungswiderstand aufweist, im Wesentlichen beliebig, d.h. entlang beliebiger Konturen, zusammen gebogen werden kann.

Am Rand der Auftrittsfläche 3 ist ein Anschlussrand 6 angeordnet, der, vorzugsweise im Wesentlichen lotrecht, von der Auftrittsfläche 3 nach oben weg absteht und entlang einer Außenkontur der Auftrittsfläche 3 verläuft. Der Anschlussrand ist vorzugsweise aber nicht zwingend einstückig mit dem Grundkörper 2 hergestellt und weist eine Randinnenseite 7 auf, die im Wesentlichen zur Gänze von einem Übergangsstreifen 8 bedeckt ist.

In bzw. an jeder Rohranschlussöffnung 5 ist ein Rohrstutzen 9 angeordnet. Jeder Rohrstutzen 9 ist dabei teilweise in einem von der jeweiligen Rohranschlussöffnung 5 abstehenden, rohrförmigen Anschlussstück 11 aufgenommen und über dieses mit der Rohranschlussöffnung 5 und dem Grundkörper 2 dicht verbunden.

Das rohrförmige Anschlussstück 11 ist entweder bereits einstückig mit dem Grundkörper 2 und somit aus demselben Material wie dieser hergestellt worden oder ein aus einem textilbeschichteten, thermoplastischen Material oder ein aus einem glasfaserverstärktem Kunststoff hergestellter Übergangsstreifen 8, welcher sich fest und dicht sowohl mit dem Material des Grundkörpers als auch dem Material des Rohrstutzens verbinden lässt. Alternativ dazu kann das Anschlussstück 11 mit einem solchen Übergangsstreifen 8 verbunden sein, der vorzugsweise entlang einer Innenseite des Anschlussstückes 11 angeordnet, insbesondere damit verbunden, ist.

Fig. 2 zeigt die in Fig. 1 dargestellte Schachtbodenauskleidung 1 in zusammengebogener Form, wodurch die äußeren Abmessungen der Schachtbodenauskleidung 1 zumindest in eine Richtung erheblich verringert werden können. Somit kann die Schachtbodenauskleidung 1 in zusammengebogener Form durch eine Einstiegsöffnung, insbesondere ein Mannloch eines Schachtes, hindurchgeführt werden, die an ihrer breitesten Stelle schmäler als der Durchmesser der Auftrittsfläche 3 ist.

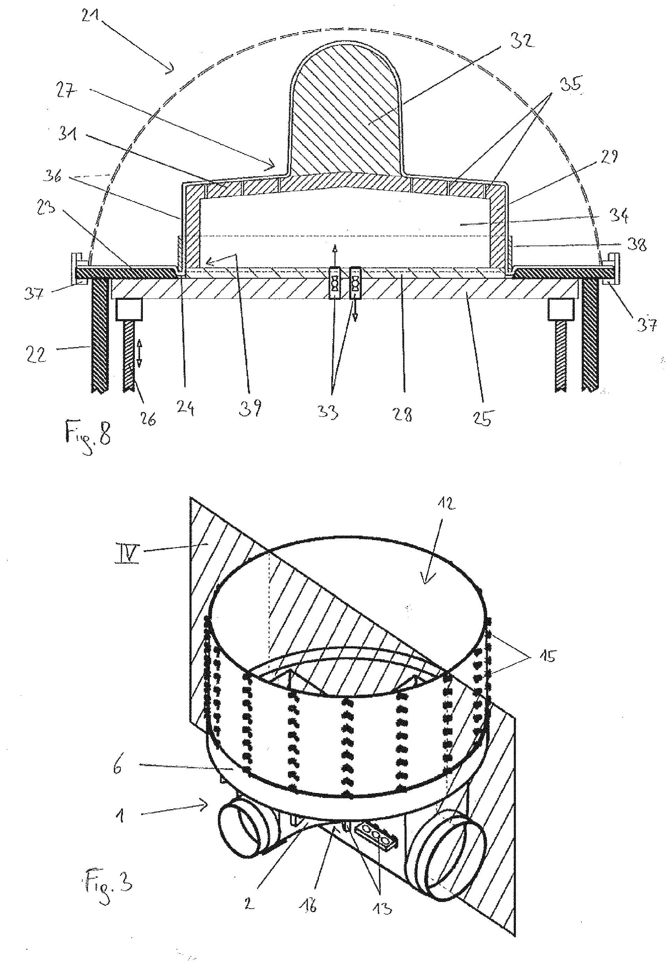

Fig. 3 zeigt eine isometrische Ansicht einer erfindungsgemäßen Schachtbodenauskleidung 1, die im Bereich des Anschlussrandes 6 mit einer Schachtwandauskleidung 12 verbunden ist.

Die in Fig. 3 dargestellte Schachtbodenauskleidung weist leistenförmige Haftbrücken 13 auf, die an geeigneten Stellen an der Unterseite des Grundkörpers 2 angeordnet sind. Des Weiteren sind an einer nach außen weisenden Oberfläche 16 des Grundkörpers 2, insbesondere im Bereich der Unterseite bzw. vorzugsweise in allen Bereichen des Grundkörpers 2, welche mit Füllmaterial hinterfüllt werden, granulatförmige Haftbrücken 14 angebracht. Die Schachtwandauskleidung 12 weist in der dargestellten Ausführungsform im Bereich der Außenseite angeordnete, weitere Haftbrücken 15 auf. Die Haftbrücken 13, 14 und 15 dienen der späteren Verankerung der Schachtbodenauskleidung 1 bzw. der Schachtwandauskleidung 12 im hinterfüllten Material.

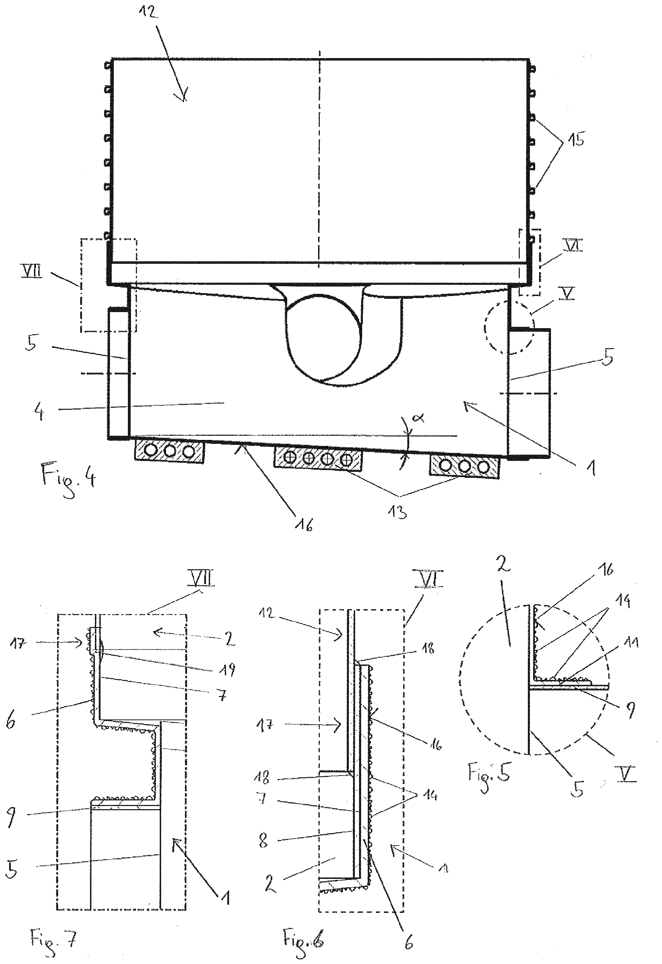

Fig. 4 zeigt einen Schnitt entlang der Ebene IV durch die in Fig. 3 dargestellte Schachtbodenauskleidung 1 und die damit verbundene Schachtwandauskleidung 12. Das Gerinne 4 zwischen den in der Schnittebene IV liegenden Rohranschlussöffnungen 5 weist ein Gefälle mit einem Gefällewinkel α auf, wobei andere Bereiche des Gerinnes 4 entweder kein Gefälle oder ein Gefälle mit einem gleichen oder anderen Gefällewinkel α aufweisen können.

Fig. 5 zeigt ein vergrößertes Detail V aus Fig. 4 im Bereich der Rohranschlussöffnung 5.

Das vom Grundkörper 2 abstehende, rohrförmige Anschlussstück 11 der Rohranschlussöffnung 5 umschließt den Rohrstutzen 9 und ist mit diesem über den gesamten Außenumfang des Rohrstutzens 9 dicht verbunden.

Das in Fig. 6 vergrößert dargestellte Detail VI aus Fig. 4 ist im Bereich des Anschlussrandes 6 angeordnet.

An der Randinnenfläche 7 des Anschlussrandes 6 ist ein Übergangsstreifen 8 angeordnet, der die Randinnenfläche 7 des Anschlussrandes 6 im Wesentlichen zur Gänze bedeckt.

Der Übergangsstreifen 8 besteht aus einem thermoplastischen Material mit wenigstens einer textilbeschichteten Seite, wird während der Herstellung des Grundkörpers 2 an diesen angeformt und ist über die an der Randinnenfläche 7 anliegende, textilbeschichtete Seite fest und dicht mit dem Anschlussrand 6 verbunden.

Die Schachtwandauskleidung 12 ist zumindest abschnittsweise im Anschlussrand 6 bzw. Übergangsstreifen 8 der Schachtbodenauskleidung 1 aufgenommen, sodass zwischen der Schachtwandauskleidung 12 und dem mit dem Anschlussrand 6 verbundenen Übergangsstreifen 8 ein Überlappungsbereich 17 gebildet ist.

Die Schachtwandauskleidung 12, die in der in Fig. 6 dargestellten Ausführungsform aus einem thermoplastischen Material besteht, ist mit dem ebenfalls aus einem thermoplastischen Material bestehenden Übergangsstreifen 8 verbunden, insbesondere am Rand der Schachtwandauskleidung 12 mittels einer Schweißnaht 18 mit dem Übergangsstreifen 8 verschweißt.

Das in Fig. 7 vergrößert dargestellte Detail VII aus Fig. 4 ist im Bereich des Anschlussrandes 6 und der Rohranschlussöffnung 5 angeordnet.

In der in Fig. 7 dargestellten Ausführungsform ist der Rohrstutzen 9 im Wesentlichen ganz in der zugeordneten Rohranschlussöffnung 5 aufgenommen und mit der Rohranschlussöffnung 5 und dem Grundkörper 2 dicht verbunden.

Die Schachtwandauskleidung 12 ist im Anschlussrand 6 der Schachtbodenauskleidung 1 aufgenommen und steht an einer im Anschlussrand verlaufenden Stufe 19 an, wobei der Überlappungsbereich 17 zwischen Anschlussrand 6 und Schachtwandauskleidung 12 eine Art Muffe bildet. Eine Innenseite der Schachtwandauskleidung 12 schließt im Wesentlichen stufenfrei bzw. bündig an die Randinnenseite 7 unterhalb des Überlappungsbereiches 17 an.

Die Schachtwandauskleidung 12, die in der in Fig. 7 dargestellten Ausführungsform aus einem duroplastischen Material besteht, ist mit dem ebenfalls aus einem duroplastischen Material bestehenden Anschlussrand 6 verbunden, insbesondere indem die Schachtwandauskleidung 12 mit dem Anschlussrand 6 im Überlappungsbereich verklebt ist oder indem ein Streifen über den Stoß zwischen der Stufe 19 und Schachtwandauskleidung 12 laminiert wird.

Fig. 8 zeigt eine bevorzugte Ausführungsform einer Hüllvorrichtung 21 zum Durchführen des Verfahrens zum Herstellen eines Formteiles, insbesondere einer erfindungsgemäßen Schachtbodenauskleidung 1.

Die Hüllvorrichtung 21 weist einen hohlzylinderförmigen Außenkörper 22 auf, der nach oben hin durch eine Platte 23 mit einer zentralen Öffnung 24 begrenzt ist und nach unten hin vorzugsweise verschlossen ist.

Im Außenkörper 22 ist ein Auflagetisch 25 parallel zur Platte 23 angeordnet, der mittels eines Hebemechanismus 26 zwischen einer abgesenkten Position, in der er von der Platte 23 beabstandet ist, und der dargestellten, angehobenen Position, in der er von unten her, insbesondere dichtend, an der Platte 23 anliegt, verstellbar ist.

In einer bevorzugten Durchführungsform des Verfahrens zum Herstellen eines Formteiles, in welcher das Formteil eine erfindungsgemäße Schachtbodenauskleidung 1 ist, wird in einem ersten Verfahrensschritt eine Negativform 27 der Schachtbodenauskleidung 1 auf dem Auflagetisch 25 angeordnet, wobei sich der Auflagetisch 25 in der abgesenkten Position befindet.

Die Negativform 27 bildet die Form der fertigen Schachtbodenauskleidung 1 nach und umfasst weiters einen hohlzylinderförmigen Grundkörper 29, der er auf einer am Auflagetisch 25 liegenden Grundplatte 28 angeordnet ist.

Der Grundkörper 29 ist an einem der Grundplatte 28 gegenüberliegenden Ende durch eine Deckplatte 31, welche in der dargestellten Ausführungsform die Form einer von der Grundplatte 28 weg gerichteten stumpfen Kegelspitze aufweist, verschlossen. Ein von der Deckplatte 31 nach oben abstehender Gerinneformkörper 32 weist die Innenform des Gerinnes 4 des Formteils, insbesondere der Schachtbodenauskleidung 1, auf.

Die Grundplatte 28 verschließt den Grundkörper 29 von unten und weist einen Durchmesser auf, der kleiner als der Durchmesser der Öffnung 24 ist. Am Auflagetisch 25 und an der Grundplatte 28 angeordnete bzw. den Auflagetisch 25 und die Grundplatte 28 durchdringende Ventile 33 verbinden nicht dargestellte Leitungen für Fluid, insbesondere für Luft, mit einem im Grundkörper 29 gebildeten Hohlraum 34.

In der Deckplatte 31 angeordnete Durchgangslöcher 35 bilden für das Fluid eine Verbindung zwischen dem Hohlraum 34 und dem Raum über der Deckplatte 31.

Nach dem Anordnen der Negativform 27 auf dem Auflagetisch 25 wird oben auf der Platte 23 eine flexible Folie 36 angeordnet, sodass die Öffnung 24 von der Folie 36 überdeckt wird.

Die flexible Folie 36 wird dicht an die Platte 23 angepresst, was insbesondere entlang eines Außenrandes der Platte 23 und vorzugsweise mit einer dort angeordneten Klemmvorrichtung 37 erfolgt.

In einem weiteren Verfahrensschritt wird durch eines der Ventile 33 Fluid, insbesondere Luft, in den Hohlraum 34 eingeblasen, sodass zwischen der Negativform 27 und der flexiblen Folie 36 ein Überdruck gebildet und die flexible Folie 36, wie in Fig. 8 in strichlierter Form dargestellt, aufgebläht wird. Die flexible Folie 36 steht dadurch kuppelförmig von der Platte 23 nach oben ab. Anschließend oder gleichzeitig wird der Auflagetisch 25 in jene angehobene Position verstellt, die in Fig. 8 dargestellt ist. Theoretisch könnte die Negativform 27 auch ohne die vorherige Aufblähung der Folie 36 nach oben gehoben und dadurch die Folie 36 gespannt werden. Dies ist aber weniger vorteilhaft, weil dadurch die Folie 36 mechanisch höher beansprucht wird.

In dieser angehobenen Position des Auflagetisches 25 wird das Fluid durch das andere Ventil 33 abgesaugt, wodurch zwischen Negativform 27 und flexibler Folie 36 ein Unterdruck gebildet und die flexible Folie 36 durch den Umgebungsdruck an die Negativform 27 angepresst wird. Die flexible Folie 36 liegt aufgrund der vorherigen Vorspannung faltenfrei an der Negativform 27 an und umhüllt diese.

Im folgenden Verfahrensschritt wird um die Folie 36 ein Gurt 38 im Bereich der Platte 23 angeordnet, insbesondere herumgespannt. Der Gurt 38 überdeckt dabei vorzugsweise auch einen Sockelbereich 39 des Grundkörpers 29 und liegt an diesem an, wobei die Folie 36 außen an den Sockelbereich 39 und die Grundplatte 28 angepresst und eine dichte Verbindung zwischen Grundplatte 28 und Grundkörper 29 gebildet wird.

Nach dem Sperren der Ventile 33 und Lösen der Klemmvorrichtung 37 kann die Negativform 27 aus der Hüllvorrichtung 21 vom Auflagetisch 25 entfernt werden, ohne dass der Unterdruck innerhalb der Negativform 27 verloren geht.

Im folgenden Verfahrensschritt kann auf die mit der flexiblen Folie 36 umhüllte Negativform 27 Material angeformt werden.

Die Negativform 27 oder einzelne oder mehrere Teile der Negativform 27 lassen sich zu einem späteren Zeitpunkt aus dem daran angeformten Formteil lösen und können so zur Herstellung weiterer Formteile verwendet werden. Ebenso ist es möglich, den Gurt 38 und die flexible Folie 36 zur Herstellung weiterer Formteile zu nutzen.

**Bezugszeichenliste**

| | | | |
|---|---|---|---|
| 1 | Schachtbodenauskleidung | 32 | Gerinneformkörper |
| 2 | Grundkörper | 33 | Ventile |
| 3 | Auftrittsfläche | 34 | Hohlraum |
| 4 | Gerinne | 35 | Durchgangslöcher |
| 5 | Rohranschlussöffnung | 36 | flexible Folie |
| 6 | Anschlussrand | 37 | Klemmvorrichtung |
| 7 | Randinnenseite | 38 | Gurt |
| 8 | Übergangsstreifen | 39 | Sockelbereich |
| 9 | Rohrstutzen | | |
| 10 | --- | | |
| 11 | Anschlussstück | α | Gefällewinkel |
| 12 | Schachtwandauskleidung | IV | Schnittebene |
| 13 | Haftbrücke mit geometrisch definierter Form | V | Detail |
| | | VI | Detail |
| | | VII | Detail |
| 14 | granulatförmige Haftbrücken | | |
| 15 | weitere Haftbrücken | | |
| 16 | Oberfläche | | |
| 17 | Überlappungsbereich | | |
| 18 | Schweißnaht | | |
| 19 | Stufe | | |
| 20 | --- | | |
| 21 | Hüllvorrichtung | | |
| 22 | Außenkörper | | |
| 23 | Platte | | |
| 24 | Öffnung | | |
| 25 | Auflagetisch | | |
| 26 | Hebemechanismus | | |
| 27 | Negativform | | |
| 28 | Grundplatte | | |
| 29 | Grundkörper | | |
| 30 | --- | | |
| 31 | Deckplatte | | |

## Patentansprüche

1. Schachtbodenauskleidung (1), insbesondere für einen Abwasserkanalschacht, mit einem Grundkörper (2), der eine Auftrittsfläche (3) und wenigstens eine Rohranschlussöffnung (5) aufweist, wobei der Grundkörper (2) einstückig aus einem flexiblen und elastisch verformbaren Material mit einer Wandstärke gefertigt ist, womit er wenigstens in Teilbereichen im Wesentlichen beliebic und elastisch zusammen gebogen werden kann.

2. Schachtbodenauskleidung nach Anspruch 1, **dadurch gekennzeichnet, dass** an der Auftrittsfläche (3) ein von der Auftrittsfläche (3) abgesenktes Gerinne (4) angeordnet ist, wobei die wenigstens eine Rohranschlussöffnung (5) an das Gerinne (4) anschließt.

3. Schachtbodenauskleidung nach Anspruch 1 oder 2, **dadurch gekennzeichnet, dass** die Auftrittsfläche (3) einen im Wesentlichen lotrecht abstehenden, an eine Außenform der Auftrittsfläche (3) angepassten Anschlussrand (6) aufweist.

4. Schachtbodenauskleidung nach Anspruch 3, **dadurch gekennzeichnet, dass** entlang einer Randinnenseite (7) des Anschlussrandes (6) ein Übergangsstreifen (8), der insbesondere gleich hoch wie der Anschlussrand (6) ist und vorzugsweise aus einem textilbeschichteten, thermoplastischen Material besteht, angeordnet, insbesondere mit der Randinnenseite (7) verbunden, ist.

5. Schachtbodenauskleidung nach einem der Ansprüche 1 bis 4, **dadurch gekennzeichnet, dass** an der Rohranschlussöffnung (5) ein Rohrstutzen (9) angeordnet ist, und insbesondere teilweise in der Rohranschlussöffnung (5) und/oder in einem an der Rohranschlussöffnung (5) ausgeformten, rohrförmigen Anschlussstück (11) aufgenommen ist.

6. Schachtbodenauskleidung nach Anspruch 5, **dadurch gekennzeichnet, dass** der Rohrstutzen (9) direkt mit der Rohranschlussöffnung (5) und/oder mit dem Anschlussstück (11) verbunden, insbesondere verklebt oder laminiert, ist.

7. Schachtbodenauskleidung nach Anspruch 5, **dadurch gekennzeichnet, dass** der Rohrstutzen (9) mit einem in der Rohranschlussöffnung (5) und/oder in dem Anschlussstück (11) angeordneten, vorzugsweise daran angeformten, textilbeschichteten, thermoplastischen Übergangsstreifen (8), verbunden, insbesondere verschweißt, ist.

8. Schachtbodenauskleidung nach einem der Ansprüche 1 bis 7, **dadurch gekennzeichnet, dass** auf einer nach außen gerichteten Oberfläche (16) des Grundkörpers (2) zumindest bereichsweise granulatförmige Haftbrücken (14) und/oder Haftbrücken mit geometrisch definierter Form (13), vorzugsweise Leistenform, angeordnet sind.

9. Schachtbodenauskleidung nach einem der Ansprüche 1 bis 8, **dadurch gekennzeichnet, dass** der Grundkörper (2) aus einem Polymer, insbesondere einem elastisch, vorzugsweise hochelastisch bzw. flexibel verformbaren Polyharnstoff, besteht.

10. Verfahren zum Auskleiden eines Schachtes, insbesondere eines Abwasserkanalschachtes, wobei der Schacht eine Innenwand, einen Boden und eine Einstiegsöffnung aufweist, und wobei wenigstens ein Rohr in den Schacht mündet, **gekennzeichnet durch** die folgenden Verfahrensschritte:
i. Herstellen einer Schachtbodenauskleidung (1) mit einem Grundkörper (2), der einstückig aus einem flexiblen und elastisch verformbaren Material und mit einer Wandstärke gefertigt ist, womit er wenigstens in Teilbereichen im Wesentlichen beliebig und elastisch zusammen gebogen werden kann,
ii. Einführen der Schachtbodenauskleidung (1) mit zusammengebogenem Grundkörper (2) durch die Einstiegsöffnung und Anordnen der auseinandergebogenen Schachtbodenauskleidung (1) am Boden des Schachtes,
iii. Festlegen der Schachtbodenauskleidung (1) am Boden des Schachtes, und
iv. Hinterfüllen der Schachtbodenauskleidung (1) mit aushärtendem Füllmaterial, insbesondere mit Beton.

11. Verfahren nach Anspruch 10, **dadurch gekennzeichnet, dass** Verfahrensschritt i. ein Verfahrensschritt i0. vorangeht, bei dem eine Geometrie des Schachtes manuell oder automatisch, insbesondere mittels eines 3D-Scanners, vermessen wird.

12. Verfahren nach Anspruch 10 oder 11, **dadurch gekennzeichnet, dass** die Schachtbodenauskleidung (1) im Verfahrensschritt iii. durch eine zerteilte und durch die Einstiegsöffnung in den Schacht eingeführte Negativform (27), insbesondere eine zur Herstellung der Schachtbodenauskleidung (1) verwendete Negativform (27) oder eine nachträglich hergestellte Negativform (27), formstabil am Boden des Schachts fixiert wird.

13. Verfahren nach einem der Ansprüche 10 bis 12, **dadurch gekennzeichnet, dass** nach Verfahrensschritt iv. eine Schachtwandauskleidung (12) durch die Einstiegsöffnung in den Schacht eingeführt und an der Schachtbodenauskleidung (1) angeordnet wird, wobei sich ein Anschlussrand (6) der Schachtbodenauskleidung (1) und die Schachtwandauskleidung (12) zumindest in einem Überlappungsbereich (17) überlappen, und dass die Schachtbodenauskleidung (1) und die Schachtwandauskleidung (12) im Bereich des Überlappungsbereiches (17) miteinander verbunden, insbesondere thermisch verbunden oder verklebt, werden.

14. Verfahren nach Anspruch 13, **dadurch gekennzeichnet, dass** der einen Übergangsstreifen (8) aus textilkaschiertem Thermoplast aufweisende Anschlussrand (6) der Schachtbodenauskleidung (1) mit der Schachtwandauskleidung (12) thermisch verbunden, insbesondere verschweißt, wird.

## Claims

1. Shaft base cladding (1), in particular for a sewer shaft, having a base body (2) which has a tread surface (3) and at least one pipe connection opening (5), wherein the base body (2) is manufactured integrally from a flexible and elastically deformable material with a wall thickness with which it can be bent together essentially at will and elastically at least in partial regions.

2. Shaft base cladding according to claim 1, **characterized in that** a channel (4) lowered from the tread surface (3) is arranged at the tread surface (3), wherein the at least one pipe connection opening (5) adjoins the channel (4).

3. Shaft base cladding according to claim 1 or 2, **characterized in that** the tread surface (3) has a substantially vertically projecting connecting edge (6) adapted to an outer shape of the tread surface (3).

4. Shaft base cladding according to claim 3, **characterized in that** a transition strip (8), which is in particular of the same height as the connection edge (6) and preferably consists of a textile-coated thermoplastic material, is arranged along an edge inner side (7) of the connection edge (6), in particular connected to the edge inner side (7).

5. Shaft base cladding according to one of the claims 1 to 4, **characterized in that** a pipe socket (9) is arranged at the pipe connection opening (5), and is especially partially accommodated in the pipe connection opening (5) and/or in a tubular connection piece (11) formed at the pipe connection opening (5).

6. Shaft base cladding according to claim 5, **characterized in that** the pipe socket (9) is directly connected, in particular glued or laminated, to the pipe connection opening (5) and/or to the connection piece (11).

7. Shaft base cladding according to claim 5, **characterized in that** the pipe socket (9) is connected, in particular welded, to a textile-coated thermoplastic transition strip (8) arranged in the pipe connection opening (5) and/or in the connection piece (11), preferably integrally formed thereon.

8. Shaft base cladding according to one of claims 1 to 7, **characterized in that** granular bonding bridges (14) and/or bonding bridges having a geometrically defined shape (13), preferably strip shape, are arranged at least in regions on an outwardly facing surface (16) of the base body (2).

9. Shaft base cladding according to one of claims 1 to 8, **characterized in that** the base body (2) consists of a polymer, in particular an elastically, preferably highly elastically or flexibly, deformable polyurea.

10. Method for cladding a shaft, in particular a sewer shaft, wherein the shaft has an inner wall, a base and an access opening, and wherein at least one pipe opens into the shaft, **characterized by** the following method steps of
i. producing a shaft base cladding (1) having a base body (2) which is manufactured integrally from a flexible and elastically deformable material and having a wall thickness with which it can be bent together substantially at will and elastically at least in partial regions,
ii. inserting the shaft base cladding (1) with the base body (2) bent together through the access opening and arranging the bent-apart shaft base cladding (1) at the base of the shaft,
iii. fixing the shaft base cladding (1) at the base of the shaft, and
iv. backfilling of the shaft base cladding (1) with hardening filling material, in particular with concrete.

11. Method according to claim 10, **characterized in that** method step i. is preceded by method step i0., in which a geometry of the shaft is measured manually or automatically, in particular by means of a 3D scanner.

12. Method according to claim 10 or 11, **characterized in that** the shaft base cladding (1) is fixed in a dimensionally stable manner to the base of the shaft in method step iii. by means of a negative mold (27) which has been cut up and introduced into the shaft through the access opening, in particular a negative mold (27) used for producing the shaft base cladding (1) or a subsequently produced negative mold (27).

13. Method according to one of claims 10 to 12, **characterized in that** after method step iv. a shaft wall cladding (12) is introduced into the shaft through the access opening and is arranged on the shaft base cladding (1), wherein a connecting edge (6) of the shaft base cladding (1) and the shaft wall cladding (12) overlap at least in an overlap region (17), and **in that** the shaft base cladding (1) and the shaft wall cladding (12) are connected to one another, in particular thermally bonded or glued, in the region of the overlap region (17).

14. Method according to claim 13, **characterized in that** the connecting edge (6) of the shaft base cladding (1), which has a transition strip (8) made of textile-coated thermoplastic material, is thermally bonded, in particular welded, to the shaft wall cladding (12).

## Revendications

1. Revêtement de fond de puits (1), en particulier pour un puits de canalisation d'eaux usées, avec un corps (2) présentant une surface praticable (3) et au moins une ouverture de raccordement de tuyau (5), dans lequel le corps (2) est fabriqué d'une pièce dans un matériau flexible et capable de déformation élastique, avec une épaisseur de paroi qui permet de le courber sensiblement à volonté de façon élastique, au moins dans certaines zones.

2. Revêtement de fond de puits selon la revendication 1, **caractérisé en ce qu'**une rigole (4) renfoncée par rapport à la surface praticable (3) est ménagée dans la surface praticable (3), l'au moins une ouverture de raccordement de tuyau (5) se raccordant à la rigole (4).

3. Revêtement de fond de puits selon la revendication 1 ou 2, **caractérisé en ce que** la surface praticable (3) présente un bord de raccordement (6) qui dépasse de façon sensiblement verticale et qui est adapté à la forme extérieure de la surface praticable (3).

4. Revêtement de fond de puits selon la revendication 3, **caractérisé en ce qu'**est disposée le long d'une face intérieure de bord (7) du bord de raccordement (6), en particulier assemblée à la face intérieure de bord (7), une bande de transition (8) qui est en particulier de la même hauteur que le bord de raccordement (6) et qui se compose de préférence d'une matière thermoplastique revêtue de textile.

5. Revêtement de fond de puits selon l'une des revendications 1 à 4, **caractérisé en ce qu'**un piquage de tuyau (9) est disposé au niveau de l'ouverture de raccordement de tuyau (5) et en particulier logé dans l'ouverture de raccordement de tuyau (5) et/ou dans une pièce de raccord de tuyau (11) tubulaire formée sur l'ouverture de raccordement de tuyau (5)

6. Revêtement de fond de puits selon la revendication 5, **caractérisé en ce que** le piquage de tuyau (9) est assemblé directement avec l'ouverture de raccordement de tuyau (5) et/ou avec la pièce de raccord (11), en particulier collé ou stratifié.

7. Revêtement de fond de puits selon la revendication 5, **caractérisé en ce que** le piquage de tuyau (9) est assemblé, en particulier soudé, avec une bande de transition (8) thermoplastique revêtue de tissu qui est disposée dans l'ouverture de raccordement de tuyau (5) et/ou disposée dans la pièce de raccord (11), de préférence formée sur celle-ci.

8. Revêtement de fond de puits selon l'une des revendications 1 à 7, **caractérisé en ce que** sont disposés au moins par zones sur la surface tournée vers l'extérieur (16) du corps (2) des reliefs d'adhérence sous forme de granulés (14) et/ou des reliefs d'adhérence ayant une forme géométrique définie (13), de préférence en forme de bandes.

9. Revêtement de fond de puits selon l'une des revendications 1 à 8, **caractérisé en ce que** le corps (2) se compose d'un polymère, en particulier d'une polyurée déformable de façon élastique, de préférence très élastique ou flexible.

10. Procédé pour l'habillage d'un puits, en particulier d'un puits de canalisation d'eaux usées, dans lequel le puits présente une paroi intérieure, un fond et une ouverture d'accès, et dans lequel au moins un tuyau débouche dans le puits, **caractérisé en ce qu'**il comprend les étapes suivantes :
i. fabrication d'un revêtement de fond de puits (1) avec un corps (2) fabriqué d'une pièce dans un matériau flexible et capable de déformation élastique, avec equel il peut être incurvé sensiblement à volonté de façon élastique, au moins dans certaines zones ;
ii. introduction du revêtement de fond de puits (1) avec le corps (2) replié à travers l'ouverture d'accès et disposition du revêtement de fond de puits (1) déplié sur le fond du puits,
iii. fixation du revêtement de fond de puits (1) sur le fond du puits et
iv. garnissage du revêtement de fond de puits (1) avec un matériau de remplissage durcissable, en particulier avec du béton.

11. Procédé selon la revendication 10, **caractérisé en ce que** l'étape i. est précédée d'une étape i0. au cours de laquelle une géométrie du puits est mesurée manuellement ou automatiquement, en particulier au moyen d'un scanner 3D.

12. Procédé selon la revendication 10 ou 11, **caractérisé en ce que** le revêtement de fond de puits (1) est fixé dans une forme stable sur le fond du puits dans l'étape iii. à l'aide d'un moule négatif (27) partagé et introduit dans le puits à travers l'ouverture d'accès, en particulier un moule négatif (27) utilisé pour fabriquer le revêtement de fond de puits (1) ou un moule négatif (27) fabriqué ultérieurement.

13. Procédé selon l'une des revendications 10 à 12, **caractérisé en ce qu'**après l'étape iv., un revêtement de paroi de puits (12) est introduit dans le puits à travers l'ouverture d'accès et disposé sur le revêtement de fond de puits (1), un bord de raccordement (6) du revêtement de fond de puits (1) et le revêtement de paroi de puits (12) se chevauchant au moins dans une zone de chevauchement (17), et **en ce que** le revêtement de fond de puits (1) et le revêtement de paroi de puits (12) sont assemblés entre eux, en particulier par application de chaleur ou collage, au niveau de la zone de chevauchement (17).

14. Procédé selon la revendication 13, **caractérisé en ce que** le bord de raccordement (6) du revêtement de fond de puits (1) présentant une bande de transition (8) en thermoplastique revêtu de textile est assemblé au revêtement de paroi de puits (12) par application de chaleur, en particulier soudé.
